Europäisches Patentamt

European Patent Office

Office européen des brevets

(11) Publication number: **0 207 548**
**A1**

## (12) EUROPEAN PATENT APPLICATION

(21) Application number: **86201007.1**

(22) Date of filing: **11.06.86**

(30) Priority: **27.06.85 NL 8501846**

(43) Date of publication of application:
**07.01.87 Bulletin 87/02**

(84) Designated Contracting States:
**AT BE CH DE FR GB IT LI NL SE**

(51) Int. Cl.4: **H04N 1/40**

(71) Applicant: **Océ-Nederland B.V.**
**St. Urbanusweg 43**
**NL-5914 CC Venlo(NL)**

(72) Inventor: **Waaijer, Martinus Johannes Maria**
**Marijkelaan 27**
**NL-6074 AP Melick(NL)**

(54) **Method of reconstructing a gray level image from a dithered image.**

㊿ A method of calculating the gray scale value for each pixel (3) of a dithered image by counting the number of black pixels within an integration area (1).

The integration area (1) is a closed area containing the same number of pixels as the number of different threshold values in the dither matrix that was used to obtain the dithered image. The percentage of black pixels within the integration area (1) gives the gray scale value (3'), which is assigned to the pixel (3) in or near the centre of the integration area (1).

The gray scale value (4') of the next pixel (4) is calculated from the number of black pixels within an integration area (2) that is moved one pixel position.

Fig-2b

## Method of reconstructing a gray level image from a dithered image

This invention relates to a method of reconstructing a gray level image from a dithered image, the dithered image being obtained from the original analog image by dithering with a dither matrix.

A method of reconstructing the gray level image from a dithered image is described, for example, in "Transmission of Gray Level Images by Multilevel Dither Techniques", by P. Pirsch and A.N. Netravali, published in Computers and Graphics Vol. 7, No. 1, pp. 31-44, 1983.

This known method first distinguishes between areas in which there is a strong variation in gray levels and areas having little or no gray level variation. This distinction is made by calculating the maximum of the lower thresholds in an area around the picture element under consideration and the minimum of the upper thresholds in that area and then comparing the two calculated values with one another. Depending upon the result of this comparison, the gray level for the picture element in question is calculated either via a first algorithm associated with a first area around the picture element under consideration or via a second algorithm associated with a second area around the picture element under consideration.

This known method is fairly complex (it requires a considerable amount of calculation time) and also requires an accurate knowledge of the dither matrix used for dithering the original image, and particularly the gray level threshold which resulted in the level of each pixel in the dithered image during the dithering process.

The object of this invention is to provide a simpler method which can be performed more quickly and which requires little prior knowledge.

According to the invention this object is attained with a method of the kind referred to in the preamble in that the gray level for each picture element is determined by counting the number of pixels having the value 1 in a closed area around the picture element under consideration, said area containing a number of pixels equal to the number of different thresholds in the dither matrix and each pixel being obtained by dithering with a different threshold, and equating the sum of said number of pixels having the value of 1 with the gray level, a sum equal to 0 corresponding to full white and a sum equal to the number of picture elements in the said area corresponding to full black.

Preferably, the area is selected so that the picture element under consideration is situated at least approximately in the middle of the area.

If a dither matrix is used in which all the thresholds occur once, the area is preferably selected to be identical to the dither matrix in respect of size and shape.

If a dither matrix is used in which each of the thresholds occurs several times, it is preferred to define a sub-matrix of adjoining thresholds in such manner that each of the possible thresholds occurs once in the sub-matrix and to select the area to be identical to the sub-matrix in respect of size and shape.

An exemplified embodiment of the method according to the invention will be discussed hereinafter with reference to the accompanying drawings.

Fig. 1 represents as an example a simple dither matrix to be used in Fig. 2.

Fig. 2 represents at a) an area divided into three sub-areas filled with different gray shades, at b) the dithered image obtained from this by means of the matrix from Fig. 1, and at c) a reconstruction of the image represented at a) in the form of a partial pattern of gray levels obtained from the dithered image by means of the method according to the invention.

Fig. 3 represents the formation of an area having the same size as a sub-matrix in the case of a dither matrix containing each gray level threshold several times.

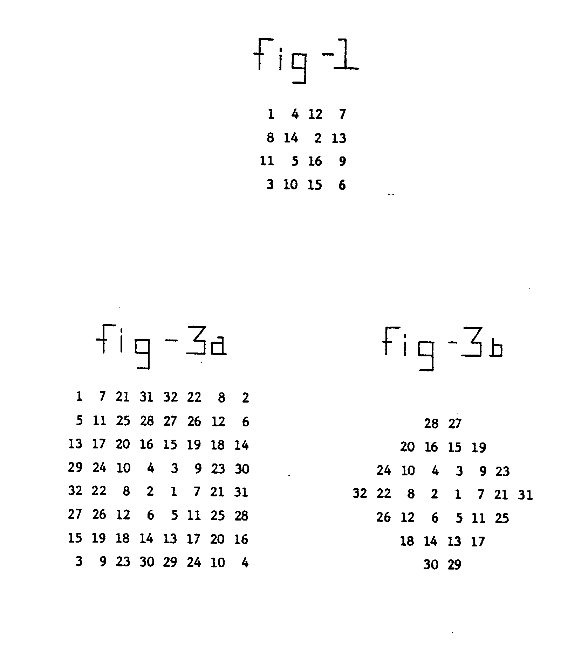

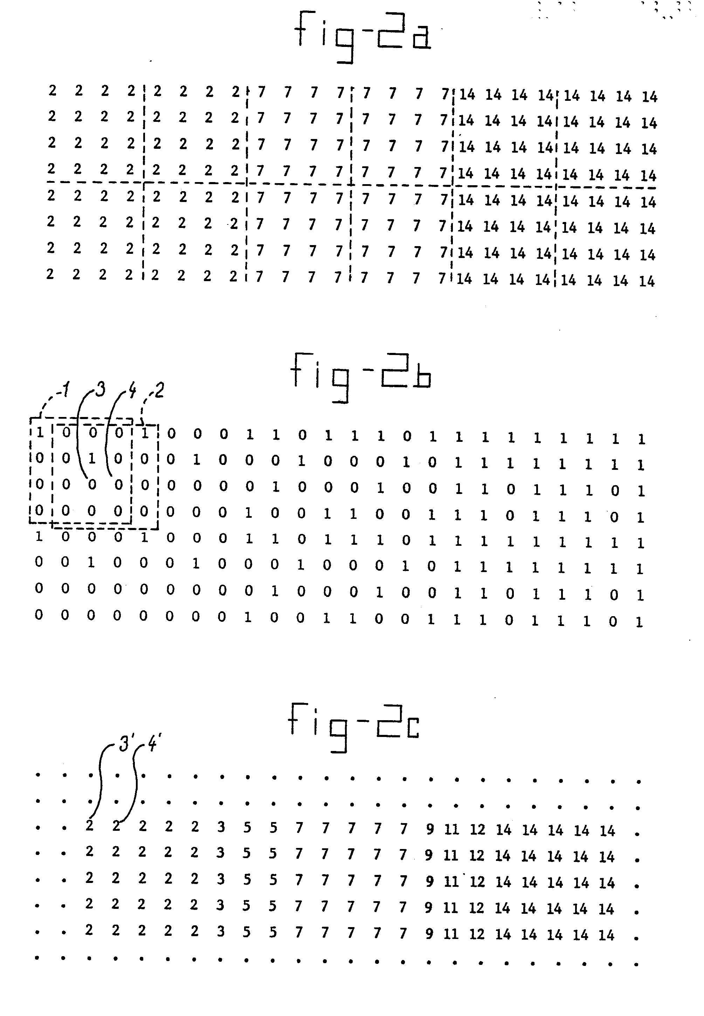

In Fig. 1, a simple 4 $^x$ 4 dither matrix is represented for use in Fig. 2.

Fig. 2a diagrammatically represents an area divided into three sub-areas filled respectively with a gray shade corresponding to the threshold 2, the threshold 7 and the threshold 13. If this area is dithered by means of the dither matrix from Fig. 1, the said dither matrix being placed consecutively on the sub-areas defined by dotted lines in Fig. 2a, the result is the dither pattern from Fig. 2b.

In accordance with the method according to the invention, it is now possible to obtain a reconstruction of the original analog pattern from Fig. 2a, starting from this dither pattern, by examining the number of 1's present in the surroundings of each picture element under consideration, the size of said surroundings preferably being selected equal to the size of the dither matrix used - (assuming that all the thresholds occur only once in this matrix). For picture point 3 at the point of intersection of the third row and the third column an area is selected which is situated within the dotted line 1. The number of 1's within that area is equal to 2 and consequently the gray level 2 is allocated in Fig. 2c to the corresponding picture point 3' at the point of intersection of the third row and the third column. A step is then taken to the right and picture point 4 is examined at the point of intersection of the third row and the fourth column. The area under consideration for this picture point is indicated by the dotted line 2 and the number of 1's within that area is again equal to 2. The gray level 2 is therefore also allocated to the corresponding picture point 4' in Fig. 2c. In this way, a pattern of gray levels can be obtained consecutively by stepwise displacement both in the direction of the row and in the direction of the column, and part of this pattern is represented in Fig. 2c. As will be apparent from Fig. 2c, this gray level pattern forms a very good approximation of the analog pattern represented in Fig. 2a.

Although it is possible to select the exact shape of the area in various ways, provided the dimensions of the area are selected so that the number of pixels contained is equal to the number of thresholds in the dither matrix used, it is generally preferable for the shape of the selected area also to correspond to the shape of the dither matrix used. In that case, a synchronization is obtained, as it were, between the dithering process and the reconstruction process. In the case of a rectangular area and a dither matrix of N × N picture elements, it is preferable for this area to be so positioned that the picture element under consideration is situated at the point of intersection of the 1/2 (N + 1)th column and the 1/2 (N + 1)th row of the matrix if N is odd and at the point of intersection of the 1/2 N + 1th row and 1/2 N + 1th column if N is even.

If dithering of the analog image is carried out with a dither matrix in which each gray level threshold occurs several times, as is the case, for example, with the dither matrix represented in Fig. 3a, it is preferable to select for the reconstruction area an area of the same size as a sub-matrix in such a way that all the thresholds occur once in this sub-matrix. The result is that the transitions between areas having different gray levels are also retained as sharply as possible in the reconstructed pattern. An example of a sub-matrix which could be used in combinaton with the dither matrix of Fig. 3a is represented in Fig. 3b.

## Claims

1. A method of reconstructing a gray level image from a dithered image, the dithered image being obtained from the original analog image by dithering with a dither matrix, characterised in that the gray level for each picture element is determined by counting the number of pixels having the value 1 in a closed area (1) around the picture element under consideration (3), said area (1) containing a number of pixels equal to the number of different thresholds in the dither matrix and each pixel being obtained by dithering with a different threshold, and equating the sum of said number of pixels having the value of 1 with the gray level, a sum equal to 0 corresponding to full white and a sum equal to the number of picture elements in the said area (1) corresponding to full black.

2. A method according to claim 1, characterised in that the area (1) is selected so that the picture element under consideration (3) is situated at least approximately in the middle of the area (1).

3. A method according to claim 1 or 2, characterised in that if a dither matrix is used in which all the thresholds occur once, the area (1) is selected to be identical to the dither matrix in respect of size and shape.

4. A method according to claim 1 or 2, characterised in that if a dither matrix is used in which each of the thresholds occurs several times, a sub-matrix of adjoining thresholds is defined in such a manner that each of the possible thresholds occurs once in the submatrix and in that the area is (1) selected to be identical to the submatrix in respect of size and shape.

## fig -1

```
 1   4 12   7
 8  14  2  13
11   5 16   9
 3  10 15   6
```

## fig - 3a

```
 1   7 21 31 32 22  8   2
 5  11 25 28 27 26 12   6
13  17 20 16 15 19 18  14
29  24 10  4  3  9 23  30
32  22  8  2  1  7 21  31
27  26 12  6  5 11 25  28
15  19 18 14 13 17 20  16
 3   9 23 30 29 24 10   4
```

## fig - 3b

```
          28 27
       20 16 15 19
    24 10  4  3  9 23
32 22  8  2  1  7 21 31
    26 12  6  5 11 25
       18 14 13 17
          30 29
```

/

## Fig-2a

| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
|---|---|---|---|---|---|---|---|---|---|---|---|---|---|---|---|----|----|----|----|----|----|----|----|
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |
| 2 | 2 | 2 | 2 | 2 | 2 | 2 | 2 | 7 | 7 | 7 | 7 | 7 | 7 | 7 | 7 | 14 | 14 | 14 | 14 | 14 | 14 | 14 | 14 |

## Fig-2b

1  3  4  2

| 1 | 0 | 0 | 0 | 1 | 0 | 0 | 0 | 1 | 1 | 0 | 1 | 1 | 1 | 0 | 1 | 1 | 1 | 1 | 1 | 1 | 1 | 1 | 1 |
|---|---|---|---|---|---|---|---|---|---|---|---|---|---|---|---|---|---|---|---|---|---|---|---|
| 0 | 1 | 0 | 1 | 0 | 0 | 1 | 0 | 0 | 0 | 1 | 0 | 0 | 0 | 1 | 0 | 1 | 1 | 1 | 1 | 1 | 1 | 1 | 1 |
| 0 | 0 | 0 | 0 | 0 | 0 | 0 | 0 | 0 | 1 | 0 | 0 | 0 | 1 | 0 | 0 | 1 | 1 | 0 | 1 | 1 | 1 | 0 | 1 |
| 0 | 0 | 0 | 0 | 0 | 0 | 0 | 0 | 1 | 0 | 0 | 1 | 1 | 0 | 0 | 1 | 1 | 1 | 0 | 1 | 1 | 1 | 0 | 1 |
| 1 | 0 | 0 | 0 | 1 | 0 | 0 | 0 | 1 | 1 | 0 | 1 | 1 | 1 | 0 | 1 | 1 | 1 | 1 | 1 | 1 | 1 | 1 | 1 |
| 0 | 0 | 1 | 0 | 0 | 0 | 1 | 0 | 0 | 0 | 1 | 0 | 0 | 0 | 1 | 0 | 1 | 1 | 1 | 1 | 1 | 1 | 1 | 1 |
| 0 | 0 | 0 | 0 | 0 | 0 | 0 | 0 | 1 | 0 | 0 | 0 | 1 | 0 | 0 | 1 | 1 | 0 | 1 | 1 | 1 | 0 | 1 |   |
| 0 | 0 | 0 | 0 | 0 | 0 | 0 | 0 | 1 | 0 | 0 | 1 | 1 | 0 | 0 | 1 | 1 | 1 | 0 | 1 | 1 | 1 | 0 | 1 |

## Fig-2c

3'  4'

| . | . | . | . | . | . | . | . | . | . | . | . | . | . | . | . | . | . | . | . | . | . | . | . |
|---|---|---|---|---|---|---|---|---|---|---|---|---|---|---|---|---|---|---|---|---|---|---|---|
| . | . | . | . | . | . | . | . | . | . | . | . | . | . | . | . | . | . | . | . | . | . | . | . |
| . | . | 2 | 2 | 2 | 2 | 2 | 3 | 5 | 5 | 7 | 7 | 7 | 7 | 7 | 9 | 11 | 12 | 14 | 14 | 14 | 14 | 14 | . |
| . | . | 2 | 2 | 2 | 2 | 2 | 3 | 5 | 5 | 7 | 7 | 7 | 7 | 7 | 9 | 11 | 12 | 14 | 14 | 14 | 14 | 14 | . |
| . | . | 2 | 2 | 2 | 2 | 2 | 3 | 5 | 5 | 7 | 7 | 7 | 7 | 7 | 9 | 11 | 12 | 14 | 14 | 14 | 14 | 14 | . |
| . | . | 2 | 2 | 2 | 2 | 2 | 3 | 5 | 5 | 7 | 7 | 7 | 7 | 7 | 9 | 11 | 12 | 14 | 14 | 14 | 14 | 14 | . |
| . | . | 2 | 2 | 2 | 2 | 2 | 3 | 5 | 5 | 7 | 7 | 7 | 7 | 7 | 9 | 11 | 12 | 14 | 14 | 14 | 14 | 14 | . |
| . | . | . | . | . | . | . | . | . | . | . | . | . | . | . | . | . | . | . | . | . | . | . | . |

2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 065 281 (HELL) <br> * Page 1, line 1 - page 6, line 12 * | 1-4 | H 04 N 1/40 |
| Y | US-A-3 524 020 (GEBEL) <br> * Column 1, line 68 - column 2, line 45 * | 1-4 | |
| A | EP-A-0 024 902 (XEROX) <br> * Page 2, lines 7-24; page 5, lines 1-13 * | 1-4 | |

TECHNICAL FIELDS SEARCHED (Int. Cl.4)

H 04 N 1/00

The present search report has been drawn up for all claims

| Place of search | Date of completion of the search | Examiner |
|---|---|---|
| THE HAGUE | 18-09-1986 | DE ROECK A.F.A. |